**Europäisches Patentamt**

**European Patent Office**

**Office européen des brevets**

(19)

(11) Veröffentlichungsnummer: **0 121 231
B1**

# (12) EUROPÄISCHE PATENTSCHRIFT

(45) Veröffentlichungstag der Patentschrift:
08.02.89

(21) Anmeldenummer: 84103409.3

(22) Anmeldetag: 28.03.84

(51) Int. Cl.⁴: **H 01 G 4/20, H 01 G 4/22,
H 01 G 4/24, H 01 G 4/38**

(54) Entladekondensator hoher Energie und hoher Gleichspannung.

(30) Priorität: 02.04.83 DE 3312076

(43) Veröffentlichungstag der Anmeldung:
10.10.84 Patentblatt 84/41

(45) Bekanntmachung des Hinweises auf die Patenterteilung:
08.02.89 Patentblatt 89/6

(84) Benannte Vertragsstaaten:
AT BE CH DE FR GB IT LI NL SE

(56) Entgegenhaltungen:
DE-A- 1 439 145
DE-A- 1 589 908
FR-A- 1 226 408

SIEMENS-BAUTEILE-INFORMATIONEN, Band 7, Heft 5,
Oktober 1969, Seiten 136-139; G. HOYLER:
"Metallisierte Kunststoffkondensatoren für hohe
Gleichspannung"

(73) Patentinhaber: ATESYS - ASSISTANCE RECHERCHE
TECHNIQUE ELECTRONIQUE ET SYSTEMES, 44, rue de
l'Industrie, F-67160 Wissembourg (FR)

(72) Erfinder: Cansell, Albert, 7, rue du Berger,
F-67160 Altenstadt (FR)
Erfinder: Boussange, Michel, 40, rue du Chateau,
F-95170 Deuil la Barre (FR)

(74) Vertreter: Patentanwälte Kohler - Schwindling - Späth,
Hohentwielstrasse 41, D-7000 Stuttgart 1 (DE)

## Beschreibung

Die Erfindung betrifft einen Entladekondensator hoher Energie und hoher Gleichspannung, vorzugsweise für Defibrillatoren, der mindestens eine als Dielektrikum wirkende Kunststoff-Folie und zwei elektrisch leitende, durch die Kunststoff-Folie getrennte Beläge aufweist, die aufgewickelt sind und von einem Gehäuse umschlossen sind, mit einer Betriebsspannung im Bereich zwischen 600 V und 6000 V und einem Speichervermögen für elektrische Energie zwischen 10 J und 500 J.

Derartige Defibrillator-Kondensatoren sind im wesentlichen in zwei unterschiedlichen Ausführungen bekannt. Bei der älteren Ausführung weist ein solcher Kondensator mit einer Kapazität mit etwa 45 µF bei einer Spannung von 4200 V, wie er für übliche Defibrillatoren, also Geräte zum Unterdrücken des Herzkammerflimmerns benötigt wird, als Dielektikum Polyäthylenterephthalatfolien und ein Volumen von etwa 2000 cm$^3$ bis 3000 cm$^3$ auf und hat unter Berücksichtigung des Gehäuses und einer im allgemeinen vorhandenen Füllung mit einem flüssigen Dielektrikum ein Gewicht von etwa 2,3 kg.

Diese bekannten Kondensatoren haben eine statistische Lebensdauer von etwa 10 000 Entladungen, wobei jedoch ein Anteil von etwa 1% der Kondensatoren schon nach einer relativ kleinen Anzahl von Entladungen, beispielsweise 50 Entladungen, nicht mehr verwendbar ist. Und zwar fallen diese Kondensatoren wegen der starken elektrischen und mechanischen Beanspruchung des Dielektrikums infolge der starken Ströme und hohen Spannungen durch einen Durchschlag zwischen den beiden Belägen des Kondensators aus, und dieser Durchschlag führt zu einem Kurzschluss zwischen den Belägen und sehr häufig auch zu einer Beschädigung des Gehäuses, weil nämlich sehr hohe Druckspitzen im Gehäuse auftreten. Der Kondensator kann dabei sogar explodieren und mechanische Zerstörungen in dem Gerät, in dem er eingebaut ist, verursachen. Eine derartige Explosion dürfte bei Kondensatoren mit einer gespeicherten Energie von etwa 10 J kaum auftreten, die Gefahr ist jedoch bei einer gespeicherten Energie ab etwa 20 J nicht vernachlässigbar und steigt mit der Grösse der gespeicherten Energie.

Besonders bei tragbaren Defibrillatoren ist das relativ hohe Gewicht und Volumen des Kondensators nachteilig, und es wurde bereits erfolgreich versucht, den Kondensator zu verkleinern. Ein derartiger verkleinerter Kondensator für Defibrillatoren, ist durch das Prospektblatt «K-FILM DEFIBRILLATOR CAPACITOR INFORMATION, TECH NOTE Nr. 111» der Firma Capacitor Specialists Incorporated, Escondido, Californien, USA, bekannt. Der bekannte Kondensator weist als Beläge Aluminiumfolien und als Dielektrikum eine Folie aus einem Polyvinylidenfluorid auf, und diese Folie ist unter dem Markennamen K-FILM bekannt. Der Vorteil dieses Materials liegt in seiner hohen Dielektrizitätskonstante von 10,4 gegenüber einem Wert von 3,2 für Polyäthylenphthalat. Ein derartiger Kondensator benötigt daher für eine Kapazität von etwa 45 µF bei einer Spannung von 4200 V, wie er für Defibrillatoren benötigt wird, die im Kondensator eine Ladung von etwa 400 J speichern können, ein Volumen von etwa 700 cm$^3$. Das Gewicht unter Berücksichtigung des Gehäuses und einer Flüssigkeitsfüllung beträgt etwa 1 kg. Es besteht jedoch der Nachteil, dass das Dielektrikum einen hohen dielektrischen Verlust von etwa 30% bis 40% aufweist. Dies führt dazu, dass zur Erhaltung der Ladung des voll aufgeladenen Kondensators ständig beträchtliche Energiemengen zugeführt werden müssen, und wenn dies nicht geschieht, entlädt sich der Kondensator bereits innerhalb weniger Sekunden merklich. Ein vollständiges Aufladen des Kondensators erfordert dabei zusätzlich, dass die Ladeeinrichtung einen gewissen Mindeststrom liefern muss, damit der von der Ladeeinrichtung gelieferte Strom grösser ist als der durch die dielektrischen Verluste aufgezehrte Strom.

Dieser Kondensator hat eine statistische Lebensdauer von etwa 5000 Entladungen, wobei jedoch auch hier wieder etwa bei 1% der Kondensatoren Frühausfälle auftreten. Auch bei diesem Kondensator besteht die Gefahr, dass er beim Auftreten eines Durchschlags explodiert.

Bei den beiden Arten bekannter Defibrillatorkondensatoren, deren Dielektrikum (Polyäthylenterephthalat bzw. Polyvinylidenfluorid) eine Spannungsfestigkeit von 500 V/µm bzw. 350 V/µm hat, ist die Dicke der Kunststoff-Folien so gewählt, dass im Betrieb keinerlei Durchschläge auftreten können (mit Ausnahme der erwähnten Frühausfälle und dann, wenn der Kondensator das Ende seiner Lebensdauer erreicht hat und hierbei möglicherweise ebenfalls im Anschluss an einen Durchschlag mechanisch völlig zerstört wird).

Durch die FR-A-1 226 408 ist der geometrische Aufbau eines selbstheilenden Wickelkondensators bekannt, bei dem die Metallisierungen jeweils auf einer Papierschicht aufgebracht sind, und zwischen den die metallischen Beläge tragenden Papierschichten ist eine Kunststoffschicht oder sind mehrere Kunststoffschichten angeordnet, die beispielsweise aus Polyethylenterephthalat bestehen. Für die Dicke der Metallisierung ist ein Bereich von 20 nm bis 100 nm angegeben. Das Papier wird bei der Herstellung des Kondensators mit einem flüssigen, nicht polymerisierten Polyester getränkt, der nach dem Wickeln polymerisiert.

Der Erfindung liegt die Aufgabe zugrunde, einen Entladekondensator für hohe Gleichspannung und hohe Energie der eingangs genannten Art zu schaffen, der bei vergleichbarer Betriebsspannung und Kapazität kein grösseres Volumen aufweist als der an zweiter Stelle genannte Kondensator mit Polyvinylidenfluorid als Dielektrikum, wobei der erfindungsgemässe Kondensator jedoch eine grössere Anzahl von Entladungen ermöglichen soll und wobei insbesondere Frühausfälle verhindert werden sollen. Auch soll das Gewicht verringert werden.

Diese Aufgabe wird gemäss der Erfindung dadurch gelöst, dass jedem Belag mindestens eine Kunststoff-Folie zugeordnet ist, dass jeder Belag durch eine Metallisierung mit einem Flächenwiderstand zwischen 2 und 30 Ohm gebildet ist, die auf einer auf einer der Kunststoff-Folien aufliegenden als Dielektrikum wirkenden Folie oder Schicht aufgebracht ist, die die Regenerierfähigkeit unterstützt, derart, dass der Kondensator als regenerierender (selbstheilender) Kondensator ausgebildet ist, dass die Folie oder Schicht mit einem flüssigen Dielektrikum getränkt ist, dass die Dicke des Gesamtdielektrikums so gewählt ist, dass beim Anliegen der Betriebsspannung eine durchschnittliche elektrische Feldstärke von 230 Volt/µm bis 360 Volt/µm vorhanden ist, dass die Dicke der einzelnen Dielektrika und das flüssige Dielektrikum so gewählt sind, dass das Verhältnis der Feldstärke zur Durchschlagfestigkeit für alle Dielektrika im wesentlichen gleich ist, und dass die Dielektrika und ihre Dicke so gewählt sind, dass für die einzelnen Dielektrika das Verhältnis der jeweiligen Grenzfeldstärke (wie unten definiert) zum Isolationswiderstand (wie unten definiert) im wesentlichen gleich ist.

Die Kunststoff-Folie besteht vorzugsweise aus Polyester, vorzugsweise Polyäthylenterephthalat.

Regenerierende Metallpapierkondensatoren sind seit vielen Jahrzehnten bekannt. Sie werden nicht für Gleichspannungskondensatoren mit hoher Energie, wie bei der Erfindung vorgesehen, verwendet.

Die genannte Aufgabe kann also überraschend dadurch gelöst werden, dass das bereits früher verwendete Dielektrikum des eingangs geschilderten relativ grossen Kondensators verwendet wird, dass das Dielektrikum, gleiche Betriebsspannung vorausgesetzt, erheblich dünner gemacht wird als bei dem bekannten Kondensator, so dass die Feldstärke im Polyester-Dielektrikum auf 300 -V/µm oder mehr ansteigt, wogegen beim bekannten Kondensator lediglich eine Feldstärke von etwa 150 V/µm vorgesehen war, und dass die Dielektrika in der angegebenen Weise ausgewählt und dimensioniert werden. Bei einer derartigen Feldstärke wird bewusst in Kauf genommen, dass während des normalen Betriebs des Kondensators Durchschläge auftreten. Je nach der Feldstärke tritt ein derartiger Durchschlag beispielsweise durchschnittlich nur nach etwa 25 Auflade- und Entladevorgängen auf, oder bei höherer Betriebsspannung tritt sogar bei jedem Aufladevorgang mindestens ein Durchschlag auf. Da jedoch der Kondensator als regenerierender Kondensator ausgebildet ist, schaden diese Durchschläge dem Kondensator nicht, und es hat sich überraschend gezeigt, dass diese Durchschläge nicht einmal die normale Funktion des Geräts, in den der Kondensator eingebaut ist, beeinträchtigen. Das heisst, dass sich durch einen derartigen Durchschlag die Aufladezeit des Kondensators, die beispielsweise für die Aufladung auf 4000 V 10 sec betragen soll, nicht merklich vergrössert. Auch sinkt die Spannung infolge eines derartigen Durchschlags nur geringfügig ab, beispielsweise von 4000 V auf 3990 V. Ein derartiger Spannungsverlust ist für die Verwendung innerhalb eines Defibrillators bedeutungslos. Der Verlust an elektrischer Energie beträgt bei einer Kapazität von 45 µF etwa 2 J (Joule) und ist für die Funktion ebenfalls vernachlässigbar.

Dadurch, dass der Kondensator selbstheilend ist, kann der Kondensator infolge von Durchschlägen nicht beschädigt werden, und somit ist auch das Problem der Frühausfälle gelöst. Der Kondensator hat eine Lebensdauer von weit mehr als 10 000 Entladevorgängen, was für einen Defibrillator völlig ausreicht. Das Ende der Lebensdauer des Kondensators macht sich nicht durch einen plötzlichen Ausfall des Kondensators bemerkbar, sondern dadurch, dass durch die Entladevorgänge, bei denen ein relativ hoher Strom, der jedoch 100 A nicht überschreitet, fliesst, die Metallisierung des Kondensators geschädigt wird, und dass bei jedem Durchschlag, bei dem ein kleiner Anteil der Kondensatorfläche infolge des Regeneriereffekts zerstört wird, die wirksame Kapazität des Kondensators langsam abnimmt.

Es kann daher ein erfindungsgemässer Kondensator notfalls weit über seine vorgesehene Benutzungsdauer im Gerät bleiben, falls aus irgendwelchen Gründen ein fabrikneuer Ersatzkondensator nicht rechtzeitig zur Verfügung steht.

Die bei einem auftretenden Durchschlag am Ort des Durchschlags in Wärme umgesetzte elektrische Energie ist so klein (gemäss dem obigen Beispiel 2 J), dass hierdurch, selbst wenn das Kondensatorgehäuse vollständig mit flüssigem Dielektrikum gefüllt ist, keine so starken Druckspitzen auftreten, dass das Gehäuse undicht werden kann. Dies ist überraschend angesichts der Tatsache, dass der Kondensator eine sehr hohe Energie von beispielsweise 400 J gespeichert haben kann und angesichts der Tatsache, dass bereits bei herkömmlichen Kondensatoren mit einer gespeicherten Energie von 10 J bis 20 J ein Durchschlag des Kondensators zur Zerstörung des Gehäuses führen kann.

Für den erfindungsgemässen Kondensator erscheint es wichtig, dass dieser in an sich bekannter Weise als Wickelkondensator hergestellt ist, wobei die beiden Beläge mit den ihnen zugeordneten Kunststoff-Folien eine im Vergleich zu ihrer Länge sehr geringe Breite haben. Im Ausführungsbeispiel beträgt die Breite etwa 8 cm und die Länge über 40 m. Es besteht dann bei dem erfindungsgemäss vorgesehenen Flächenwiderstand der Metallisierung für den Strom, der zu einer Durchschlagstelle strömt, ein relativ hoher mittlerer Widerstand, weil dieser Strom die Metallisierung von nur einer Schicht durchfliessen muss. Dagegen fliessen der normale Entladestrom und der Ladestrom des Kondensators durch mit den Längskanten der Metallisierungen in Verbindung stehende Kontakte, nämlich über auf die Stirnflächen des im wesentlichen zylindrischen Kondensatorwickels aufgebrachte Metallschichten, ab bzw. zu, und dabei sind alle Widerstände der einzelnen Metallisierungen parallel geschaltet. Somit ist der Gesamtwiderstand gering.

Wenn eine Mehrzahl von Kunststoff-Folien jedem Belag zugeordnet ist, kann ausserdem die Spannungsfestigkeit des Dielektrikums besser ausgenutzt werden, weil zufällig vorhandene Fehlerstellen im Dielektrikum nicht in mehreren Folien an genau übereinanderliegenden Stellen vorkommen werden. Dadurch wird die Anzahl der Durchschläge relativ klein gehalten. Ein einzelner Durchschlag schadet dem Kondensator zwar nicht, es würde jedoch die Kapazität des Kondensators möglicherweise auf Dauer nachteilig beeinflusst, wenn aufgrund der Schadhaftigkeit einer Folie bei jedem Aufladevorgang sehr viele Durchschläge auftreten würden.

Der erwähnte Flächenwiderstand ist von der Art des Metalls und der Dicke der Metallschicht abhängig; dieser Flächenwiderstand wird für ein quadratisches Flächenelement angegeben, wobei der Wert des Flächenwiderstands von der tatsächlichen Grösse des quadratischen Flächenelements unabhängig ist.

Die beim Kondensator verwendeten unterschiedlichen Dielektrika (z.B. Polyester und getränktes Papier) haben eine unterschiedliche elektrische Durchschlagfestigkeit, was gleichbedeutend ist mit einer unterschiedlichen Grenzfeldstärke. Als Grenzfeldstärke soll hier eine Feldstärke verstanden werden, bei der mit Sicherheit an jeder beliebigen Stelle des Dielektrikums ein Durchschlag erfolgt. Erfindungsgemäss ist der Kondensator so konstruiert, dass diese unterschiedlichen Grenzfeldstärken im wesentlichen gleich stark ausgenutzt werden, beispielsweise jeweils 80% der Feldstärke an jedem Dielektrikum anliegt, bei der dieses Dielektrikum durchschlägt.

Deswegen, weil die hohe Gleichspannung am Kondensator nicht nur äusserst kurzzeitig wirksam ist, sondern im allgemeinen mehrere Sekunden, spielt für die sich einstellende Feldstärke in den verschiedenen Dielektrika offenbar der ohm'sche Widerstand der Dielektrika eine Rolle. Dieser hier als Isolationswiderstand bezeichnete Wert ist umso grösser, je grösser die Dicke des Dielektrikums ist, und umso kleiner, je grösser die Fläche des Dielektrikums ist. Hieraus ergibt sich, dass dann, wenn ein Kondensator unter Verwendung lediglich eines einzigen Dielektrikums hergestellt wird, das Produkt des Isolationswiderstands multipliziert mit der Kapazität des Kondensators eine Materialkonstante ist, die allerdings stark von den jeweiligen Messbedingungen, beispielsweise der Temperatur und der Spannung, abhängt. Dann, wenn mit Hilfe dieses Dielektrikums ein spezieller Kondensator hergestellt ist, so ergibt sich aus der Fläche und der Dicke des Dielektrikums und somit aus der Kapazität, die sich ergeben würde, wenn man beide Seiten des Dielektrikums mit leitenden Belägen versehen würde, der Isolationswiderstand, der in Ohm oder MegOhm gemessen wird. Die oben genannte Materialkonstante wird hier als spezifischer Isolationswiderstand bezeichnet.

Der Einfluss des Isolationswiderstands auf die Feldstärkeverteilung im Kondensator wird deutlich, wenn man sich einen Kondensator, der beispielsweise ein Dielektrikum aus einer Folie Polyester und einer Papierschicht aufweist, als die Serienschaltung von zwei Kondensatoren vorstellt, von denen der eine ein Dielektrikum nur aus Polyester und der andere ein Dielektrikum nur aus Papier aufweist, und jedem Kondensator ist ein Widerstand parallel geschaltet, der dem Isolationswiderstand der speziellen Polyesterschicht bzw. der speziellen Papierschicht entspricht. Diese ebenfalls in Serie geschalteten Widerstände des Ersatzschaltbildes beeinflussen die Spannungsverteilung an den Kondensatoren und somit die elektrische Feldstärke in den unterschiedlichen Dielektrika.

Bei der oben angegebenen Wahl und Dimensionierung der Dielektrika liegt auch die gewünschte gleichmässige Ausnutzung der Durchschlagfestigkeit der unterschiedlichen Dielektrika vor. Die aus der Literatur bekannten Werte für den spezifischen Isolationswiderstand sind für sehr kleine Spannungen, beispielsweise wenige Volt, gültig. Dann, wenn die auftretende Feldstärke sich der Grenzfeldstärke nähert, wie dies bei den erfindungsgemässen Kondensatoren der Fall ist, hat dieser spezifische Isolationswiderstand einen Wert, der nur einen Bruchteil des Wertes bei niedriger Spannung beträgt. Es ist nicht sicher, ob diese Verringerung des spezifischen Isolationswiderstandes bei den verschiedenen Dielektrika im Kondensator jeweils um den gleichen Faktor erfolgt. Bei dem im Ausführungsbeispiel beschriebenen Kondensator wird die Spannungsfestigkeit oder Grenzfeldstärke der Dielektrika zu etwa 80% ausgenutzt. Die Tatsache, dass nur selten Durchschläge auftreten, deutet darauf hin, dass der spezifische Isolationswiderstand bei sehr hohen Feldstärken für den vorliegenden Anwendungsfall hinreichend genau um den gleichen Faktor reduziert wird. Die Verringerung des Isolationswiderstandes bei hohen Feldstärken tritt bereits während des Aufladens des Kondensators auf. Wenn die Feldstärke in einem der Dielektrika sich der Durchschlagfeldstärke nähert, verringert sich dessen Isolationswiderstand, und hierdurch erhöht sich dann die Feldstärke am anderen Dielektrikum schneller. Dies wird bei Betrachtung des oben genannten Ersatzschaltbildes klar. Folglich sorgt während des Aufladevorganges die genannte Spannungsabhängigkeit der Isolationswiderstände dafür, dass die Verhältnisse der tatsächlichen Feldstärke zur Grenzfeldstärke in den verschiedenen Dielektrika jedenfalls nicht so stark voneinander verschieden sind, dass der Erfindungszweck nicht erreicht würde. Je näher die Feldstärke an der Grenzfeldstärke liegt, umso kleiner ist der Isolationswiderstand.

Insgesamt hat der erfindungsgemässe Kondensator gegenüber dem eingangs geschilderten Kondensator mit dem Dielektrikum Polyvinylidenfluorid den Vorteil eines nur geringen dielektrischen Verlustes von etwa 0,1 bis 0,5%. Insbesondere beim Betrieb aus Akkumulatoren, wie er für Defibrillatoren allgemein üblich ist, kann eine erhöhte Anzahl von Schocks aus einer einzigen Akkumulatorladung gewonnen werden. Gegenüber den oben ebenfalls genannten bekannten Kondensatoren, die Polyäthylenterephthalat als Dielektrikum aufweisen, hat er den Vorteil einer erheblich grösseren Energiedichte, d.h. eines viel kleineren Volumens.

Ein Vorteil der Erfindung liegt auch in ihrem im Vergleich zu den bekannten Entladekondensatoren erheblich geringeren Gewicht. Die bekannten Kondensatoren verwenden nämlich separate Metallfolien als Beläge, und diese Metallfolien haben eine erheblich grössere Dicke und somit ein erheblich grösseres Gewicht als die Metallisierung.

Die die Regenerierung begünstigende Schicht enthält vorzugsweise Cellulose oder ist auf der Basis von Celluloseverbindungen hergestellt. Derartige Stoffe sind beispielsweise Celluloseacetobutyrat oder Celluloseacetat. Derartige Materialien halten die beim Durchschlag auftretende hohe Temperatur aus, die auch in einem gewissen Umkreis um die Durchschlagstelle dort, wo die Metallisierung verdampft, auftritt. Dagegen wäre die Polyesterfolie nicht als Träger für die Metallisierung geeignet, da die Polyesterfolie beim Auftreten eines Durchschlags geschädigt würde.

Bei Ausführungsformen der Erfindung ist der Belag die Metallisierung eines Metallpapiers. Das Metallpapier ist, wie an sich bekannt, Lackpapier mit aufgedampftem Zinn oder Aluminium und mit dem flüssigen Dielektrikum getränkt, vorzugsweise mit einem Silikonöl. Silikonöl hat sich als besonders günstig erwiesen, da es die Anzahl der beim normalen Betrieb auftretenden Durchschläge in Grenzen hält. Dagegen haben Versuche beispielsweise mit Rizinusöl gezeigt, dass ein derartiges Material eine Vielzahl von Durchschlägen hervorruft.

Obwohl die einzelnen Durchschläge für den Kondensator nicht schädlich sind, besteht dennoch im allgemeinen das Bestreben, die Anzahl der Durchschläge relativ gering zu halten, weil ein jeder derartiger Durchschlag ein nicht sehr lautes, jedoch immerhin hörbares Geräusch verursacht.

Der Vorteil dieser Ausführungsform mit Metallpapier liegt darin, dass das als Träger der Metallisierung dienende Papier, nämlich Lackpapier, recht hohe Temperaturen verträgt, so dass beim Auftreten von Durchschlägen eine hohe Sicherheit gegen Beschädigungen des Kondensators besteht. Durch die Verwendung des Metallpapiers für die beiden Beläge ist der Kondensator mit hoher Sicherheit regenerierfähig, er heilt also bei auftretenden Spannungsdurchschlägen dadurch aus, dass in der Umgebung der Durchschlagstelle die Metallschicht des Metallpapiers verdampft. Durch die Verwendung mindestens zweier, vorzugsweise genau zweier Kunststoff-Folien aus dem angegebenen Dielektrikum, ist es möglich, die Durchschlagsicherheit gegenüber der Verwendung einer einzigen Folie erheblich zu steigern, da die Wahrscheinlichkeit des Auftretens von Fehlstellen in den Kunststoff-Folien an genau der gleichen Stelle sehr unwahrscheinlich ist.

Es lassen sich mit einem Bereich des Flächenwiderstandes von etwa 2 bis 15 Ohm Kondensatoren, die sich für externe Defibrillation eignen, mit einer Speicherenergie von etwa 400 J verwirklichen. Diese können als Einzelwickel oder als Parallelschaltung von mehreren Wickeln realisiert werden. Die Gesamtkapazität solcher Kondensatoren beträgt etwa 10 bis 50 µF und die angelegte Gleichspannung beträgt etwa 4000 V bis 6000 V. In Einzelfällen wie bei interner Defibrillation können jedoch auch Gleichspannungen bis herab zu 600 V verwendet werden. Wenn mehrere Kondensatorwickel oder fertige Kondensatoren zur Schaffung der genannten Speicherenergie von etwa 400 J parallelgeschaltet werden, so kann dies ohne besondere Massnahmen zur Energietrennung geschehen, die Kondensatorwickel oder Kondensatoren können daher durch dicke Drähte miteinander verbunden werden.

Es kann vorteilhaft sein, Flächenwiderstände von maximal bis zu 30 Ohm für die Metallisierungen zu verwenden. Dann ist es jedoch zweckmässig, im Randbereich der Metallisierungen, dort wo die Verbindung zu einer aufgespritzten Metallschicht für die Verbindung mit den Anschlussdrähten vorhanden ist, die Metallisierung etwas dicker zu machen und ebenfalls mit einem Flächenwiderstand zwischen 2 und 15 Ohm, vorzugsweise zwischen 5 Ohm und 10 Ohm, auszubilden.

Die meisten Vorteile gegenüber dem Stand der Technik hat die Erfindung vermutlich in einem Energiebereich zwischen 200 J und 500 J der speicherbaren Energie. Kondensatoren für diesen Energiebereich werden für externe Defibrillation von Erwachsenen benötigt. Die Erfindung ist jedoch auch anwendbar für Kondensatoren mit einer speicherbaren Energie zwischen 50 J und 200 J. Diese Kondensatoren werden benötigt für die externe Defibrillation bei Kindern und für die Cardioversion, das ist die Behandlung von anderen Rhythmusstörungen als Kammerflimmern (Kammerflimmern = ventrikuläre Fibrillation). Schliesslich ist die Erfindung auch für Kondensatoren mit einem Bereich zwischen 10 J und 50 J der speicherbaren Energie geeignet, wie sie für interne Defibrillation, also für inplantierte Defibrillatoren benötigt wird. Jeder dieser einzelnen Energiebereiche wird für sich als erfindungswesentlich angesehen.

Die Energiedichte, die mit einem Kondensator mit Metallpapier und zwei Kunststoffolien, wie er oben beschrieben wurde, erreichbar ist, wobei das Papier und die Folien jeweils 6 µm dick sind, beträgt etwa 1,2 J/cm³. Beispielsweise weist ein Kondensator, der zwei Wickel von je 11 µF enthält, die elektrisch parallelgeschalteten sind, bei einer Spannung von 6 kV eine elektrische Energie von 400 J auf und findet in einem Gehäuse von 350 cm³ Platz. Er hat ein Gewicht von etwa 510 g.

Mit dem gleichen konstruktiven Aufbau, jedoch mit kleinerer Dicke der verschiedenen Dielektrika, können bei gleicher Energiedichte Kondensatoren für implantierbare Defibrillatoren mit folgenden Eigenschaften verwirklicht werden: Die Speicherenergie beträgt zwischen 10 J und 50 J (vorzugsweise 20 J bis 50 J) mit weitgehend beliebigen Kapazitäts- und Spannungswerten.

Vorzugsweise sind beim erfindungsgemässen Kondensator zwei Kunststoff-Folien vorgesehen, und die Dicke des Papiers (Lackpapier) und jeder Kunststoff-Folie beträgt etwa 6 µm. Die Dicke der Metallisierung aus Zinn beträgt dabei, um den angegebenen Flächenwiderstand von etwa 2 bis 15 Ohm zu verwirklichen, etwa 0,01 bis 0,02 µm. Die Energiedichte, die sich mit einem derartigen Kondensator verwirklichen lässt, liegt bei der Betriebsspannung etwa im Bereich zwischen 0,5 J/cm³ und 1,2 J/cm³. Während bei dieser Ausführungsform der Erfindung somit das Dielektrikum eine Gesamtdicke von etwa 18 µm hat, was bei einer Spannung von etwa 6000 V eine durchschnittliche Feldstärke über das Gesamtdielektrikum von 333 V/µm ergibt, liegt die Belastung handelsüblicher Kondensatoren unter 150 V/µm. Bei der Erfindung kann also die Spannungsfestigkeit des Dielektrikums sehr viel stärker ausgenutzt werden als beim Stand der Technik.

Bei den bisher besprochenen Ausführungsformen, bei denen der Flächenwiderstand etwa 2 bis 15 Ohm beträgt, ist vorzugsweise ein Bereich von etwa 5 bis 10 Ohm verwendet, weil dieser sich technisch besonders leicht verwirklichen lässt. Bei den oben beschriebenen Ausführungsformen mit einem Flächenwiderstand zwischen etwa 2 und 15 Ohm ist durch die Wahl dieses Flächenwiderstands gewährleistet, dass die für die Selbstheilung der Metallisierung verbrauchte Energie klein bleibt und keine zerstörerische Auswirkung hat. Bei diesem Ausführungsformen ist die Belastbarkeit des Kondensators und/oder seiner Lebensdauer, in der Anzahl von Lade- und Entladezyklen gemessen, begrenzt. Berechnungen und Versuche ergeben bei diesem Flächenwiderstand von etwa 2 bis 15 Ohm und den oben angegebenen angenäherten Kapazitäten der Kondensatoren eine Grenze für den Spitzenstrom bei etwa 100 A und für eine abgebbare Impulszahl von etwa 100.000. Oberhalb dieser genannten Belastung bzw. Impulsanzahl erfolgt ein nicht zu vernachlässigender Abbau der Metallisierung und dadurch eine Verringerung der Kapazität. Bei Defibrillatoren ist bekannt, dass ein Spitzenstrom des Kondensators von 100 A nie erreicht wird, und dass 20 000 Impulse oder Schocks eine durchaus genügende Lebensdauer bedeuten.

Die Erfindung wird im folgenden anhand von Ausführungsbeispielen für Kondensatoren und für Kondensatorbatterien anhand der Zeichnung, die erfindungswesentliche Einzelheiten zeigt, weiter erläutert. Die einzelnen Merkmale können je einzeln für sich oder zu mehreren in beliebiger Kombination bei einer Ausführungsform der Erfindung verwirklicht sein. Es zeigen:

Fig. 1 einen Querschnitt durch die beiden Mehrfachschichten eines Einzelkondensators, die im aufgewickelten Zustand den Kondensator bilden,

Fig. 2 einen Längsschnitt durch eine Kondensatorbatterie mit zwei Einzelkondensatoren in einem Metallgehäuse,

Fig. 3 eine der Fig. 1 ähnliche Darstellung eines anderen Kondensators.

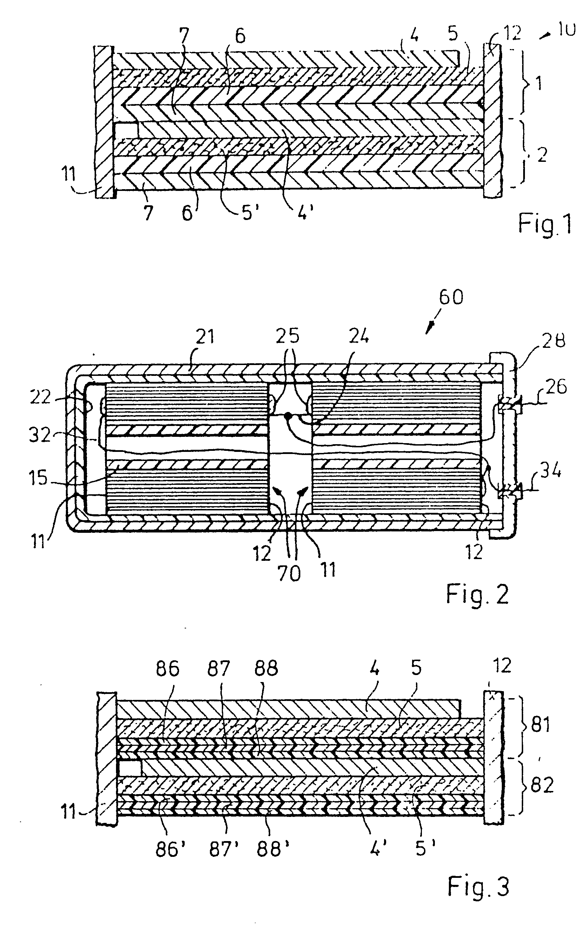

In Fig. 1 sind zwei völlig gleich ausgebildete Mehrfachschichten 1 und 2 gezeigt. Jede Mehrfachschicht besteht aus einem mit einer Metallschicht 4 bzw. 4' aus Zinn versehenen Papier 5 bzw. 5' und zwei Kunststoff-Folien 6 und 7 aus Polyäthylenterephthalat. Bei dem Papier 5, 5' mit der Metallschicht 4, 4' handelt es sich um sogenanntes Metallpapier. Das Papier 5, 5' selbst ist Lackpapier. Die Lackschicht besteht aus Celluloseacetat, es kann auch z.B. Celluloseacetobutyrat verwendet werden. Der Lack ermöglicht eine glatte Oberfläche und ist in einer Dicke von etwa 0,5 µm aufgetragen. Die Metallschicht 4 reicht nicht bis zum rechten seitlichen Rand des Papiers 5, jedoch bis zum linken Rand, und die Metallschicht 4' reicht bis zum rechten Rand des Papiers 5', nicht jedoch bis zum linken Rand. Die Abstände auf jeder Seite betragen 3 mm. Die Papiere 5, 5' und die Kunststoff-Folien 6 und 7 sind gleich breit. Auf die in Fig. 1 links und rechts liegenden Stirnflächen des durch Aufwickeln der Mehrfachschichten 1 und 2 gebildeten Kondensators 10 ist eine Metallschicht 11 bzw. 12 aus Zinn aufgespritzt, die die Metallschichten 5 bzw. 5' kontaktieren und an denen Anschlussdrähte angelötet werden können. Die Metallschicht 4, 4' hat einen Flächenwiderstand von 7,5 Ohm und ist jeweils 15 nm (Nanometer) dick. Unterhalb des Zinns befindet sich eine Silberschicht von 0,2 bis 0,5 nm Dicke. Das trockene Papier hat einen spezifischen Isolationswiderstand von 10 000 bis 15 000 Megohm × Mikrofarad (bei niedriger Feldstärke gemessen). Mit Siliconöl getränkt hat das Papier einen spezifischen Isolationswiderstand von etwa 25 000 Megohm × Mikrofarad. Die Grenzfeldstärke beträgt etwa 250 V/µm. Der spezifische Isolationswiderstand des verwendeten Polyesters beträgt 50 000 Megohm × Mikrofarad. Die Papierschicht 5, 5' und die beiden Kunststoffschichten 6 und 7 sind jeweils 6 µm dick. Durch diesen relativ hohen Flächenwiderstand sind die Spitzenströme bei einem Spannungsdurchbruch so stark verringert, dass die Kondensatorbatterie nach Fig. 2 keine besonderen Massnahmen zur Energietrennung, also keine Widerstände oder Induktivitäten benötigt. Die in Fig. 1 sichtbare Breite der Papierschicht und der Kunststoffschichten beträgt beim Ausführungsbeispiel 80 mm, die in Fig. 1 nicht sichtbare Länge beträgt 48 m. Im aufgewickelten Zustand, wobei die Schichten dicht aneinander anliegen und der fertige Kondensator mit einem flüssigen Dielektrikum, nämlich mit Siliconöl gefüllt ist, hat der Kondensatorwickel eine Kapazität von 11 µF. Durch ein aussen um den Kondensatorwickel gewickeltes selbstklebendes Polyesterband von etwa 70 µm Dicke wird verhindert, dass sich der Wickel von selbst löst. Beim Wickeln des Kondensators werden die Folien mit einer Kraft von 20 bis 25 N (Newton) gespannt.

Die Dielektrizitätskonstante des Polyäthylenterephthalats beträgt 3,2, die Dielektrizitätskonstante des mit dem flüssigen Dielektrikum getränkten Papiers beträgt 4,8. Insgesamt ergibt sich für das auf diese Weise gebildete Mischelektrikum eine mittlere Dielektrizitätskonstante von 4,2.

Die Mehrfachschichten 1 und 2 werden zur Bildung des fertigen Einzelkondensators oder Kondensatorwickels 10 auf einen Wickeldorn 15 aus Kunststoff aufgewickelt. In den Ausführungsbeispielen ist dieser Wickeldorn 15 durch ein Kunststoffrohr gebildet und somit hohl. Der Einzelkondensator 10 kann allein in ein Gehäuse eingebaut werden.

Beim Ausführungsbeispiel der Fig. 2 sind jedoch in einem Gehäuse 60, das durch einen gezogenen Metallbecher 21 aus Aluminium gebildet ist, zwei Einzelkondensatoren 10 unter Zwischenlage einer Isolationsschicht 22 eingebaut. Die einander zugewandten Metallschichten 11 und 12 der beiden Einzelkondensatoren 10 im mittleren Bereich des Gehäuses 60 sind durch einen Verbindungsdraht 24 mittels Lötpunkten 25 miteinander verbunden, und eine Leitung 26 ist mit der Leitung 24 verbunden und durch den Wickeldorn 15 des in Fig. 2 rechten Einzelkondensators 10 hindurch nach rechts geführt und durch eine isoliert montierte Anschlussbuchse in einem Metalldeckel 28, der das Gehäuse 60 verschliesst, herausgeführt. Die Metallschicht 11 des linken Einzelkondensators 10 ist über eine durch beide Wickeldorne 15 verlaufende Verbindungsleitung 32 mit der Metallschicht 12 des rechten Einzelkondensators 10 verbunden und durch den Deckel 28 hindurch nach aussen zu einem Anschluss 34 geführt.

Die Kondensatorbatterie 20 wird in den Metallbecher 21 eingebaut und das Gehäuse mit dem flüssigen Dielektrikum 36 gefüllt, wobei das Auffüllen in an sich bekannter Weise im Vakuum erfolgt, um Lufteinschlüsse im Papier zu verhindern. Anschliessend wird der Deckel 28 dicht aufgebracht. Die Verbindungsleitungen im Inneren des Gehäuses sind ausreichend lang bemessen, um den die Anschlüsse 26 und 34 tragenden Deckel vor dem Verschliessen kontaktieren zu können. Die Kondensatorbatterie 20 ist nun gebrauchsfertig und kann an eine Gleichspannung beliebiger Polarität angeschlossen werden. Die Verbindungsleitungen im Gehäuse haben einen vernachlässigbaren Widerstand.

Der Kondensator nach Fig. 2 hat Gehäuseabmessungen von 50 mm Durchmesser und 180 mm Länge und ein Gewicht von 510 g. Er hat eine Kapazität von 22 µF. Die Energiedichte bezogen auf das Gewicht beträgt bei einer Betriebsspannung von 6 000 V 0,77 J/g und liegt deutlich höher als bei herkömmlichen Kondensatoren mit Polyester-Dielektrikum. Bei einer Betriebsspannung von 5 700 V treten nur selten (im Durchschnitt nach je 25 Aufladungen) Durchschläge auf, bei einer Betriebsspannung von 6 500 V tritt bei jedem Aufladevorgang mindestens ein Durchschlag auf. Als Siliconöl ist Methylpolysiloxan 47V100 von Rhone-Poulenc, Frankreich verwendet.

Der Kondensator hat bei einer Betriebsspannung von 6 000 V eine durchschnittliche Feldstärke von 333 V/µm. Im Papier herrscht eine Feldstärke von 150 V/µm und im Polyester herrscht eine Feldstärke von 400 V/µm. Diese Werte wurden messtechnisch ermittelt.

Eine Abwandlung des in den Fig. 1 und 2 gezeigten Kondensators verwendet anstatt der zwei Kunststoffschichten mit je 6 µm Dicke zwei Kunststoffschichten des gleichen Polyesters mit je 4 µm Dicke. Bei einer Betriebsspannung von 4 400 V herrscht dann im Papier eine Feldstärke von 200 V/µm und im Kunststoff eine Feldstärke von 400 V/µm. Es ist hier die Grenzfeldstärke beider Dielektrika zu 80% ausgenutzt. Dieser Kondensator hat eine Kapazität von 40 Mikrofarad und speichert bei der genannten Spannung eine Energie von etwa 400 J.

Man kann damit rechnen, dass das Volumen des Kondensators einschliesslich des Gehäuses etwa 10 bis 15% grösser ist als das Volumen der Kondensatorwickel. Im Beispiel der Fig. 1 und 2 hat der beschriebene Kondensator mit den Kunststoff-Folien von je 6 µm Dicke eine Energiedichte von etwa 1 J/cm³ bei der Betriebsspannung von 5 700 V. Der modifizierte Kondensator mit einer Dicke der Kunststoff-Folien von 4 µm hat eine Energiedichte von etwa 1,1 J/cm³ bei der genannten Betriebsspannung von 4 400 V.

Der in Fig. 3 gezeigte Kondensator hat anstatt der zwei Folien 6, 7 nach Fig. 1 drei Folien 86, 87, 88 des gleichen Materials mit einer Dicke von je 2 µm. Die Mehrfachschichten sind hier mit den Bezugszeichen 81 und 82 versehen. Er überscheidet sich elektrisch von dem Kondensator nach Fig. 1 nur dadurch, dass er eine Kapazität von etwa 50 µF, Betriebsspannung von 4 000 V und eine Energie von 400 J hat.

Es erscheint möglich, andere Kunststoffe anstatt von Polyäthylenterephthalat oder anderen Polyestern zu verwenden.

Die Ausführungsbeispiele dienen lediglich der Erläuterung der Erfindung, sie sollen keine Beschränkung darstellen. Insbesondere erscheint es möglich, mittels der Erfindung eine gegenüber den Ausführungsbeispielen höhere Energiedichte zu verwirklichen.

Die Bezugszeichen in den Ansprüchen sind keine Beschränkung, sondern sollen das Verständnis erleichtern.

**Patentansprüche**

1. Entladekondensator hoher Energie und hoher Gleichspannung mit einer Energiedichte von mindestens 0,4 J/cm³, vorzugsweise für Defibrillatoren, der mindestens eine als Dielektrikum wirkende Kunststoff-Folie und zwei elektrisch leitende, durch die Kunststoff-Folie getrennte Beläge (4) aufweist, die aufgewickelt sind und von einem Gehäuse (60) umschlossen sind, mit einer Betriebsspannung im Bereich zwischen 600 V und 6000 V und einem Speichervermögen für elektrische Energie zwischen 10 J und 500 J, dadurch gekennzeichnet, dass jedem Belag (4) mindestens eine Kunststoff-Folie (6, 7, 86, 87, 88) zugeordnet ist, dass jeder Belag durch eine Metallisierung (4) mit einem Flächenwiderstand zwischen 2 und 30 Ohm gebildet ist, die auf einer die Regenerierfähigkeit unterstützenden als Dielektrikum wirkenden Folie oder Schicht (5) aufgebracht ist, die auf einer der Kunststoff-Folien aufliegt, derart, dass der Kondensator als regenerierender (selbstheilender) Kondensator ausgebildet ist, dass die Folie oder Schicht (5) mit einem flüssigen Dielektrikum getränkt ist, dass die Dicke des Gesamtdielektrikums so gewählt ist, dass beim Anliegen der Betriebsspannung eine durchschnittliche elektrische Feldstärke von 230 Volt/µm bis 360 Volt/µm vorhanden ist, dass die Dicke der einzelnen Dielektrika und das flüssige Dielektrikum so gewählt sind, dass das Verhältnis der Feldstärke zur Durchschlagfestigkeit für alle Dielektrika im wesentlichen gleich ist, und dass die Dielektrika und ihre Dicke so gewählt sind, dass für die einzelnen Dielektrika das Verhältnis der jeweiligen Grenzfeldstärke (wie hier definiert) zum Isolationswiderstand (wie hier definiert) im wesentlichen gleich ist.

2. Kondensator nach Anspruch 1, dadurch gekennzeichnet, dass die Kunststoff-Folie (6, 7, 86, 87, 88) aus Polyester, vorzugsweise Polyäthylenterephthalat, besteht.

3. Kondensator nach einem der vorhergehenden Ansprüche, dadurch gekennzeichnet, dass die die Regenerierfähigkeit unterstützende Folie oder Schicht (5) auf der Basis von Cellulose oder einer Celluloseverbindung hergestellt ist.

4. Kondensator nach Anspruch 3, dadurch gekennzeichnet, dass der Belag die Metallisierung (4) eines Metallpapiers (4, 5) ist.

5. Kondensator nach einem der Ansprüche 1 bis 4, dadurch gekennzeichnet, dass jedem Belag zwei Kunststoff-Folien (6, 7) zugeordnet sind.

6. Kondensator nach Anspruch 5, dadurch gekennzeichnet, dass die Dicke des Papiers (5) bzw. jeder Kunststoff-Folie (6, 7) etwa 6 µm beträgt.

7. Kondensator nach einem der Ansprüche 1 bis 4, dadurch gekennzeichnet, dass jedem Belag mindestens drei Kunststoff-Folien (86, 87, 88) zugeordnet sind.

8. Kondensator nach Anspruch 4 oder 7, dadurch gekennzeichnet, dass die Dicke des Papiers (4) etwa 6 µm bzw. die Dicke jeder Kunststoff-Folie (86, 87, 88) etwa 4 µm beträgt.

9. Kondensator nach einem der vorhergehenden Ansprüche, dadurch gekennzeichnet, dass der Flächenwiderstand der Metallisierung (4) 2 Ohm bis 15 Ohm, vorzugsweise 5 Ohm bis 10 Ohm, beträgt.

10. Kondensator nach einem der Ansprüche 1 bis 8, dadurch gekennzeichnet, dass der Flächenwiderstand der Metallisierung 15 Ohm bis 30 Ohm beträgt, und dass die Metallisierung eine verstärkte Randzone mit einem Flächenwiderstand von 5 Ohm bis 10 Ohm aufweist.

11. Kondensator nach einem der Ansprüche 1 bis 10, dadurch gekennzeichnet, dass das flüssige Dielektrikum (36) ein Siliconöl ist.

**Claims**

1. High energy and high d.c. voltage discharge capacitor with an energy density of at least 0.4 J/cm$^3$, preferably for defibrillators, which has at least one plastic film acting as a dielectric and two electrically conducting coatings (4) separated by the plastic film, which are wound up and surrounded by a casing (60), with an operating voltage in the range 600 to 6000 V and a storage capacity for electrical energy between 10 and 500 J, characterized in that with each coating (4) is associated at least one plastic film (6, 7, 86, 87, 88), that each coating is formed by a metallization (4) with a surface resistance between 2 and 30 Ohm and which is fitted to a layer or sheet (5) acting as a dielectric and assisting the regeneratability and which rests on one of the plastic films, in such a way that the capacitor is constructed as a regenerating (self-curing) capacitor, that the layer or sheet (5) is impregnated with a liquid dielectric, that the thickness of the complete dielectric is selected in such a way that on applying the operating voltage there is an average electrical field strength of 230 to 360 V/µm, that the thickness of the individual dielectrics and the liquid dielectric are selected in such a way that the ratio of the field strength to the dielectric strength for all the dielectrics is substantially the same and that the dielectrics and their thickness are selected in such a way that for the individual dielectrics the ratio of the particular limit field strength (as defined herein) to the insulation resistance (as defined herein) is substantially the same.

2. Capacitor according to claim 1, characterized in that the plastic film (6, 7, 86, 87, 88) is made from polyester, preferably polyethylene terephthalate.

3. Capacitor according to one of the preceding claims, characterized in that the sheet or layer (5) assisting the regeneratability is produced on the basis of cellulose or a cellulose compound.

4. Capacitor according to claim 3, characterized in that the coating is the metallization (4) of a metal paper (4, 5).

5. Capacitor according to one of the claims 1 to 4, characterized in that two plastic films (6, 7) are associated with each coating.

6. Capacitor according to claim 5, characterized in that the thickness of the paper (5) or each plastic film (6, 7) is approximately 6 µm.

7. Capacitor according to one of the claims 1 to 4, characterized in that with each coating are associated at least three plastic films (86, 87, 88).

8. Capacitor according to claims 4 or 7, characterized in that the thickness of the paper (4) is approximately 6 µm and the thickness of each plastic film (86, 87, 88) is approximately 4 µm.

9. Capacitor according to one of the preceding claims, characterized in that the surface resistance of the metallization (4) is 2 to 15 Ohm, preferably 5 to 10 Ohm.

10. Capacitor according to one of the claims 1 to 8, characterized in that the surface resistance of the metallization is 15 to 30 Ohm and that the metallization has a reinforced marginal zone with a surface resistance of 5 to 10 Ohm.

11. Capacitor according to one of the claims 1 to 10, characterized in that the liquid dielectric (36) is a silicone oil.

## Revendications

1. Condensateur de décharge à haute énergie et haute tension continue, présentant une densité d'énergie d'au moins 0,4 Joule/cm³, à utiliser de préférence dans un défibrillateur, condensateur comprenant au moins, comme diélectrique, une feuille d'un matériau synthétique plastique et deux armatures conductrices séparées par la feuille en matériau synthétique plastique, l'ensemble de ces couches étant enroulé et introduit dans un boîtier (60), condensateur fonctionnant en haute tension de service dans la gamme de 600 à 6000 volts et présentant une capacité de stockage en énergie électrique se situant entre 10 et 500 Joules, caractérisé en ce qu'à chaque armature (4) est associée au moins une feuille de matériau synthétique plastique (6, 7, 86, 87, 88), que chaque armature est constituée d'une métallisation (4) de résistance superficielle par unité de surface comprise entre 2 et 30 Ohms portée par une couche (5) agissant comme diélectrique et favorisant la régénération, couche reposant sur une des feuilles de matière synthétique plastique, de façon à constituer un condensateur se présentant comme un condensateur régénérant ou autocicatrisant et en ce que la feuille ou la couche (5) est imprégnée d'un diélectrique liquide et en ce que l'épaisseur totale de l'ensemble des diélectriques est choisie de façon que, lors de l'application de la tension de fonctionnement ou de service, s'établisse un champ électrique compris entre 230 volts/µm et 360 volts/µm, en ce que les épaisseurs de chacun des diélectriques ainsi que le diélectrique liquide sont choisies de manière que pour chacun des diélectriques le rapport entre le champ électrique auquel il est soumis et son champ disruptif soit sensiblement le même, et que les diélectriques ainsi que leurs épaisseurs sont choisis de telle manière que pour chacun des diélectriques le rapport entre le champ limite (comme défini ici) et la résistance d'isolement (comme défini ici) soit sensiblement égal.

2. Condensateur selon la revendication 1, caractérisé en ce que la feuille de matériau synthétique plastique (6, 7, 86, 87, 88) est réalisée en polyester, de préférence en polytéréphtalate d'éthylène.

3. Condensateur selon l'une des revendications précédentes, caractérisé en ce que la feuille ou couche (5) favorisant la régénération est réalisée à base de cellulose ou d'une combinaison de cellulose.

4. Condensateur selon la revendication 3, caractérisé en ce que le revêtement de métallisation de l'armature est un papier métallisé (4, 5).

5. Condensateur selon l'une des revendications de 1 à 4, caractérisé en ce qu'à chaque armature sont associées deux feuilles de matériau synthétique plastique.

6. Condensateur selon la revendication 5, caractérisé en ce que l'épaisseur du papier métallisé (5) et celle de chaque feuille de matériau synthétique plastique (6, 7) se situent aux environs de 6 µm.

7. Condensateur selon l'une des revendications de 1 à 4, caractérisé en ce qu'à chaque armature sont associées au moins trois feuilles du matériau synthétique plastique (86, 87, 88).

8. Condensateur selon la revendication 4 ou 7, caractérisé en ce que l'épaisseur du papier métallique (4) est de l'ordre de 6 µm, selon le cas, l'épaisseur de chaque feuille de matériau synthétique plastique (86, 87, 88) est de l'ordre de 4 µm.

9. Condensateur selon l'une des revendications précédentes, caractérisé en ce que la résistance par unité de surface de la métallisation (4) est comprise entre 2 et 15 Ohms, de préférence entre 5 et 10 Ohms.

10. Condensateur selon l'une des revendications de 1 à 8, caractérisé en ce que la résistance par unité de surface de la métallisation est comprise entre 15 et 30 Ohms et en ce que la métallisation comporte une zone périphérique renforcée présentant une résistance par unité de surface comprise entre 5 et 10 Ohms.

11. Condensateur selon l'une des revendications de 1 à 10, caractérisé en ce que le diélectrique liquide (36) est une huile de silicone.

Fig.1

Fig. 2

Fig. 3